(19) Europäisches Patentamt

European Patent Office

Office européen des brevets

(11) **EP 3 896 621 B1**

(12) **EUROPEAN PATENT SPECIFICATION**

(45) Date of publication and mention
of the grant of the patent:
**02.04.2025 Bulletin 2025/14**

(21) Application number: **21154525.6**

(22) Date of filing: **01.02.2021**

(51) International Patent Classification (IPC):
**G06N 5/01** *(2023.01)*  **G06N 7/01** *(2023.01)*

(52) Cooperative Patent Classification (CPC):
**G06N 5/01; G06N 7/01**

(54) **OPTIMIZATION APPARATUS, OPTIMIZATION METHOD, AND OPTIMIZATION PROGRAM**

OPTIMIERUNGSVORRICHTUNG, OPTIMIERUNGSVERFAHREN UND OPTIMIERUNGSPROGRAMM

APPAREIL, PROCÉDÉ ET PROGRAMME D'OPTIMISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2020 JP 2020071652**

(43) Date of publication of application:
**20.10.2021 Bulletin 2021/42**

(73) Proprietor: **FUJITSU LIMITED**
**Kanagawa 211-8588 (JP)**

(72) Inventor: **Matsuura, Satoshi**
**Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
**US-A1- 2020 090 051**

• **SANROKU TSUKAMOTO ET AL: "An Accelerator Architecture for Combinatorial Optimization Problems", FUJITSU SCIENTIFIC & TECHNICAL JOURNAL (FSTJ), vol. 53, no. 5, 1 September 2017 (2017-09-01), pages 18 - 13, XP055673462**
• **TANAKA SHU ET AL: "Theory of Ising Machines and a Common Software Platform for Ising Machines", 2020 25TH ASIA AND SOUTH PACIFIC DESIGN AUTOMATION CONFERENCE (ASP-DAC), IEEE, 13 January 2020 (2020-01-13), pages 659 - 666, XP033746221, DOI: 10.1109/ ASP-DAC47756.2020.9045126**
• **XIAOYUAN LIU ET AL: "On Modeling Local Search with Special-Purpose Combinatorial Optimization Hardware", ARXIV.ORG, CORNELL UNIVERSITY LIBRARY, 201 OLIN LIBRARY CORNELL UNIVERSITY ITHACA, NY 14853, 22 November 2019 (2019-11-22), XP081585677**

**Description**

FIELD

The embodiments discussed herein are related to an optimization apparatus, an optimization method, and an optimization program.

BACKGROUND

In our society, there are many "combinatorial optimization problems", such as optimizations for a procedure of disaster recovery and a delivery route, each of which selects an optimal combination from among combinations of many elements under constraints such as limited human resources and time. As one of methods for searching for the optimal solutions of the combinatorial optimization problems, there is an Ising computing device to which a type of Monte Carlo method named a simulated annealing method is applied. The simulated annealing method is a method for stochastically obtaining a solution by using random number values.

The Ising computing device is a computing device that searches for a combination of variables that minimize the energy of an Ising model represented by a predetermined evaluation formula. This variable is referred to as a spin, a value of the variable is referred to as a spin state, and a transition of the spin state is referred to as an inversion in some cases.

The Ising computing device determines whether to invert each spin based on an inversion determination formula, and searches for the lowest energy by sequentially transitioning the states. Real problems are each formulated into an energy formula of the Ising model, and a combination of spin states that minimize the energy is searched for with the Ising computing device, so that various types of combinatorial optimization problems may be solved.

A lowest energy search method in the simulated annealing method will be briefly described. The Ising computing device starts search from initial states in which 0 or 1 is substituted for each of variables in an evaluation function representing a problem to be solved. The Ising computing device selects states close to the current states of the combination of variables, and considers a state transition to the close states. The states close to the current states are, for example, the states in which the state of one variable is changed. Next, the Ising computing device calculates a change amount of energy with a transition to the selected states, and stochastically selects whether to accept the state transition or to reject it and maintain the current states according to the calculated value. When the probability of acceptance for a case where the energy decreases is set to be higher than the probability of acceptance for a case where the energy increases, a state change occurs in a direction in which the energy decreases on average, and the Ising computing device is able to finally reach energy at or close to an optimal solution. If the state transition is deterministically accepted in a case where the energy decreases and is rejected in a case where the energy increases, a change in the energy will be a monotonous decrease over time in a broad sense. However, when a local solution is reached, a further state transition does not occur, and it is difficult to expect to reach an optimal solution. Therefore, in the search for a combinatorial optimization problem, it is important to stochastically determine whether to accept the state transition.

In the annealing method, it is proved that the states are optimized in the limit of an infinite number of times by determining that, for example, a smaller value of 1 and $e^{-(\Delta E/T)}$ is used as the probability of acceptance of the state transition. Here, T is a parameter called a temperature. The Ising computing device sets T to be sufficiently high as an initial temperature and decreases T in accordance with the number of iterations of the search. In a case where the steady states are reached after a sufficiently large number of iterations by using the probability of acceptance set to follow the above-described formula, the probability of each state being occupied follows the Boltzmann distribution in thermal equilibrium in mechanics. Therefore, when the temperature gradually decreases from a high temperature, an occupancy rate of low energy states increases. For this reason, when the temperature decreases sufficiently, the Ising computing device is able to obtain the low energy states close to an optimal solution.

The Ising computing device starts from initial states in which initial values of spin states and initial values of local fields and energy calculable from the initial values of the spin states are appropriately set, iterates the above-described processing, and ends the operation when a certain number of iterations are completed. A set of the lowest energy value and the spin states held by the Ising computing device at this time is a search result.

In recent years, for a reason that a problem having a larger scale and a higher degree of difficulty is handled and other reasons, there has been proposed a method for searching for the lowest energy by the Ising computing device in cooperation with software, rather than searching for the lowest energy by the Ising computing device alone. In such a method, the software determines the spin states for starting the computation in advance by preprocessing, or takes out a result of the Ising computing device in the course of the computation, changes some of the spin states, and then returns the resultant spin states to the Ising computing device again to continue the search.

As a method for solving a combinatorial optimization problem, there is a related art in which an offset value in a local solution having the lowest energy is set to be larger than an offset value in a case where the energy is not the lowest, and the offset is added to the change amount of energy to make acceptance determination.

Related art is disclosed in Japanese Laid-open Patent Publication No. 2018-63626.

US 2020/090051 A1 discloses an optimization problem operation method and operation unit to solve combinatorial optimization problems using an Ising model.

SUMMARY

However, as described above, before the start of computation, the Ising computing device sets the energy according to the spin states and sets the initial local field for each spin. The calculation for calculating these is calculation of the number of elements of the square of the number of spins in a case where the spin state takes any of the values. The calculation of these values by software involves too large overhead in terms of computation time and is not practical. Therefore, in the related art, the computation for generating the initial states is avoided by starting the computation from states in which the spin states of spins are all set to 0. This is because, in a case where the spin states are 0, the energy is just the constant term, and the local field is just the bias term of each spin. In the related art, in a case where the computation is started from specific spin states, the overhead on the software side is tolerated. As described above, in the related art, it is not easy to generate appropriate initial states, and it is difficult to improve the processing performance of the Ising computing device.

Even by using the offset in the related art in which the offset is added to the change amount of energy to make acceptance determination, it is still difficult to calculate the local fields and the energy in the initial states, and it is difficult to improve the processing performance of the Ising computing device.

The disclosed technology has been made in view of the above discussion, and an object thereof is to provide an optimization apparatus, an optimization method, and an optimization program that improve processing performance for a combinatorial optimization problem.

The present invention provides an optimization apparatus according to claim 1, an optimization method according to claim 3, and an optimization program according to claim 4.

In one aspect, the present invention may improve processing performance for a combinatorial optimization problem.

BRIEF DESCRIPTION OF DRAWINGS

FIG. 1 is a block diagram of an Ising computing device according to Embodiment 1.
FIG. 2 is a block diagram illustrating details of an annealing unit according to Embodiment 1.
FIGs. 3A and 3B are a flowchart of optimal solution search processing by the Ising computing device according to Embodiment 1.
FIG. 4 is a diagram of an arrangement configuration of an Ising computing device.
FIG. 5 is a diagram of a circuit image of a unit circuit.
FIG. 6 is a flowchart of processing in using the Ising computing device according to Embodiment 1.
FIG. 7 is a block diagram of an Ising computing device in a case of cooperating with software.
FIG. 8 is a flowchart of processing in using the Ising computing device cooperating with the software.
FIG. 9 is a diagram for explaining speed-up by cooperation with software.

DESCRIPTION OF EMBODIMENTS

Hereinafter, embodiments of an optimization apparatus, an optimization method, and an optimization program disclosed in the present application will be described in detail with reference to the drawings. The optimization apparatus, the optimization method, and the optimization program disclosed in the present application are not limited to the following embodiments.

[Embodiment 1]

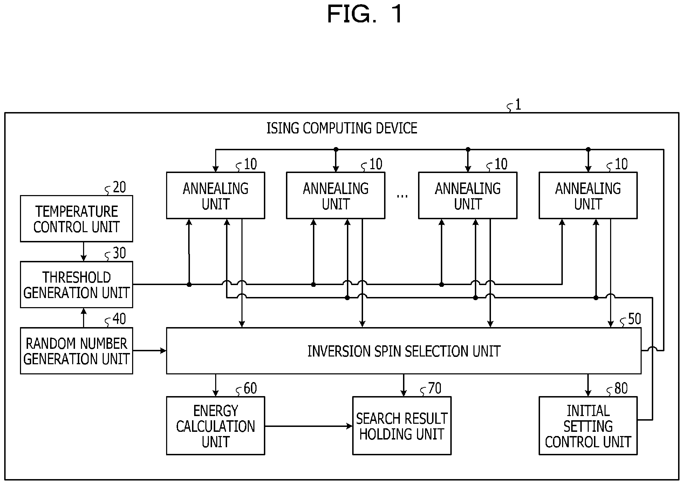

FIG. 1 is a block diagram of an Ising computing device according to Embodiment 1. The Ising computing device 1 includes a plurality of annealing units 10, a temperature control unit 20, a threshold generation unit 30, a random number generation unit 40, an inversion spin selection unit 50, an energy calculation unit 60, a search result holding unit 70, and an initial setting control unit 80. For example, one Ising computing device 1 is equipped with 1024 annealing units 10.

The Ising computing device 1 is an optimization apparatus that searches for a combination of variables $x_i$ ($x_0$, $x_1$, ..., $x_n$) that minimize the energy of an Ising model represented by formulae (1) to (4), which are evaluation functions. Here, a variable $x_i$ in the formula (1) is a state variable and takes a value of 0 or 1. In the following description, the variable $x_i$

is referred to as a "spin", the value of the variable $x_i$ is referred to as a "spin state", and a transition of the spin state is referred to as an "inversion". For example, the spin state is represented as 0 or 1. The inversion is a transition of the spin state from 0 to 1 or from 1 to 0.

[Math. 1]

$$E = -\sum_{<i,j>} W_{ij}\, x_i x_j - \sum_i b_i x_i + c \qquad \cdots (1)$$

[Math. 2]

$$\Delta E_i = \begin{cases} -h_i\,(for\ x_i = 0 \to 1) \\ +h_i\,(for\ x_i = 1 \to 0) \end{cases} \qquad \cdots (2)$$

[Math. 3]

$$h_i = \sum_j W_{ij}\, x_j + b_i \qquad \cdots (3)$$

[Math. 4]

$$\delta h_i = \begin{cases} +W_{ij}\,(for\ x_j = 0 \to 1) \\ -W_{ij}\,(for\ x_j = 1 \to 0) \end{cases} \qquad \cdots (4)$$

Here, E is energy, and $\Delta E_i$ is a change amount of energy in a case where $x_i$ is inverted. In addition, $h_i$ is a local field for $x_i$, and $\delta h_i$ is a change amount of the local field for $x_i$. The change amount of energy may also be expressed by $\Delta E$, below.

The temperature control unit 20 is a circuit that controls a value of a temperature parameter. The temperature parameter is a temperature value for controlling the temperature. The temperature parameter may also be expressed by T, below.

For example, in accordance with the simulated annealing method, the temperature control unit 20 decreases the temperature from a sufficiently high initial temperature by gradually decreasing the value of the temperature parameter in proportion to the number of iterations of the search. After starting from the initial states, the operation is iterated while the temperature control unit 20 decreases the temperature, and is ended when an end determination condition is satisfied, such as a condition where the a certain number of iterations have been done or the energy falls below a certain value. Instead, the temperature control unit 20 may also use a replica exchange method in which the lowest energy search is performed under a low temperature condition and a high temperature condition by executing several systems called replicas having different temperature conditions in parallel, and exchanging the systems after every predetermined number of iterations.

The random number generation unit 40 is a circuit that generates a random number value. The random number generation unit 40 outputs the generated random number to the threshold generation unit 30 and the inversion spin selection unit 50.

The threshold generation unit 30 is a circuit that generates a threshold for determining whether or not to set each spin as an inversion candidate. The threshold generation unit 30 acquires the temperature parameter from the temperature control unit 20. The threshold generation unit 30 acquires the random number value from the random number generation unit 40.

In the present embodiment, the inversion of the variable is accepted according to the following formula (5). For example, the inversion of the variable is accepted by using the smaller value of $e^{-\Delta E/T}$ and 1 as the probability of acceptance.

[Math. 5]

$$P = \min\left[1, e^{-\frac{\Delta E}{T}}\right] \qquad \cdots (5)$$

In the present embodiment, the inversion spin is accepted according to the formula (5) stochastically with the random number generated by the random number generation unit 40. In this case, the condition that the probability of acceptance follows the formula (5) is equivalent to the condition that the inversion is accepted when the following formula (6) using a uniform random number r is satisfied.

[Math. 6]

$$\Delta E < T \times \log \frac{1}{r} \qquad \cdots (6)$$

The formula (6) is a formula for determining whether to accept the inversion, and is referred to as an "inversion determination formula" below in some cases.

The threshold generation unit 30 generates the value of the right side of the formula (6) using the temperature parameter and the random number value. The threshold generation unit 30 outputs the generated value of the right side of the formula (6) to the annealing units 10.

When the Ising computing device 1 starts operating, the initial setting control unit 80 outputs an initialization signal. After that, when the initialization is completed along with the formation of desired initial states and there is no more spin for which the inversion candidate flag has to be set, the initial setting control unit 80 receives a notification of the absence of the inversion candidate flag from the inversion spin selection unit 50. In this case, the initial setting control unit 80 stops outputting the initialization signal. Hereinafter, a state where the initial setting control unit 80 outputs the initialization signal is referred to as a state where the initialization signal is on, and a state where the initial setting control unit 80 is stopped from outputting the initialization signal is referred to a state where the initialization signal is off in some cases.

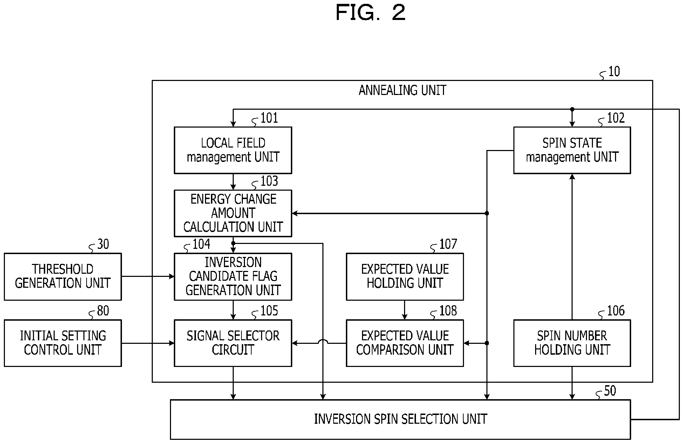

The annealing unit 10 is a circuit that holds a spin state and a local field for 1 bit of spin, for example, for one spin, and determines whether or not to set its own spin as an inversion candidate based on a change amount of energy associated with an inversion of the own spin. Hereinafter, the annealing units 10 will be described in detail with reference to FIG. 2. FIG. 2 is a block diagram illustrating details of the annealing unit according to Embodiment 1. As illustrated in FIG. 1, a plurality of annealing units 10 are present. The annealing units 10 control different spins but execute the same processing. Therefore, a specific annealing unit 10 will be described below. In the following description, the spin to be controlled by each annealing unit 10 is referred to as the own spin.

As illustrated in FIG. 2, the annealing unit 10 includes a local field management unit 101, a spin state management unit 102, an energy change amount calculation unit 103, an inversion candidate flag generation unit 104, a signal selector circuit 105, a spin number holding unit 106, an expected value holding unit 107, and an expected value comparison unit 108.

The spin number holding unit 106 holds a spin number for identifying the own spin. For example, the spin number is i in a case where the spin is represented as $x_i$. In the annealing unit 10 in which the own spin is the spin $x_i$, the spin number holding unit 106 holds i as the spin number for identifying the spin $x_i$. The spin number holding unit 106 outputs the held spin number to the spin state management unit 102 and the inversion spin selection unit 50.

The spin state management unit 102 holds the current spin state of the own spin and manages the spin state of the own spin. For example, the spin state management unit 102 receives the setting of the initial value of the spin state of the own spin at the start of optimal solution search processing. The spin state management unit 102 acquires the spin number from the spin number holding unit 106. The spin state management unit 102 outputs the spin state together with the spin number to the energy change amount calculation unit 103 and the expected value comparison unit 108.

Thereafter, when the inversion of the spin is accepted, the spin state management unit 102 receives a notification of the confirmation of the inversion spin together with the spin number of the inversion spin from the inversion spin selection unit 50. If the own spin is the inversion spin, the spin state management unit 102 updates the held spin state by setting the inverted spin state as the current spin state of the own spin.

The local field management unit 101 holds information on the current local field and manages the local field for the own spin. Here, since it is possible to calculate the change amount of energy in a case where the own spin is inverted in accordance with the formula (2) based on the local field and the spin state, the local field management unit 101 in each annealing unit 10 holds the information on the local field in order to enable the annealing unit 10 to calculate the change amount of energy. The local field management unit 101 outputs the held local field to the energy change amount calculation unit 103.

For example, the local field management unit 101 receives the setting of the initial value of the local field for the own spin at the start of the optimal solution search processing. Instead, the local field management unit 101 may receive an input of the initial values of the spins and calculate the initial value of the local field for the own spin. Thereafter, when the inversion spin is confirmed, the local field management unit 101 updates the held information of the local field for the own spin as described later. The local field management unit 101 outputs the held information on the local field to the energy change amount calculation unit 103.

In a case where the inversion is accepted, the local field management unit 101 receives the notification of the confirmation of the inversion spin together with the spin number of the inversion spin from the inversion spin selection unit 50. Next, the local field management unit 101 calculates the change amount of the local field in accordance with the formula (4) using the spin number of the inversion spin confirmed to be inverted. The local field management unit 101 calculates the local field for the own spin by adding the calculated change amount of the local field to the information on the local field held by the local field management unit 101 itself. Thereafter, the local field management unit 101 updates the held information on the local field by setting the information on the calculated local field as the information on the current local field.

The energy change amount calculation unit 103 receives an input of the information on the local field from the local field management unit 101. The energy change amount calculation unit 103 receives an input of the spin state of the own spin from the spin state management unit 102. The energy change amount calculation unit 103 calculates a change amount of energy associated with the inversion of the own spin by using formula (2). Thereafter, the energy change amount calculation unit 103 outputs the calculated change amount of energy associated with the inversion of the own spin to the inversion candidate flag generation unit 104 and the inversion spin selection unit 50.

The inversion candidate flag generation unit 104 receives an input of the change amount of energy associated with the inversion of the own spin from the energy change amount calculation unit 103. The inversion candidate flag generation unit 104 receives an input of the value of the right side of the inversion determination formula expressed by the formula (6) from the threshold generation unit 30. The inversion candidate flag generation unit 104 determines whether or not the change amount of energy satisfies the inversion determination formula in which the value acquired from the threshold generation unit 30 is substituted into the right side of the formula (6).

If the change amount of energy satisfies the inversion determination formula, the inversion candidate flag generation unit 104 generates an inversion candidate flag indicating that the own spin is the inversion candidate, and outputs the inversion candidate flag to the inversion spin selection unit 50. On the other hand, if the change amount of energy does not satisfy the inversion determination formula, the inversion candidate flag generation unit 104 generates an inversion candidate flag indicating that the own spin is not the inversion candidate, and outputs the inversion candidate flag to the inversion spin selection unit 50. For example, assuming that the inversion candidate flag is F, the inversion candidate flag generation unit 104 sets the value F to 1 if the flag indicates that the own spin is the inversion candidate, and sets the value F to 0 if the flag indicates that the own spin is not the inversion candidate. Thereafter, the inversion candidate flag generation unit 104 outputs the generated inversion candidate flag to the signal selector circuit 105. The inversion candidate flag generation unit 104 is an example of a "determination unit".

The expected value holding unit 107 receives an input of the expected value of the own spin at a computation start time from an input device (not illustrated) or the like. Here, the computation start time is a timing for starting substantial annealing after the spin states of all the spins transition to predetermined initial states. The expected value is a value indicating a spin state which is given to each of the spins in the evaluation function and which is determined as the initial state at the computation start time. The expected value holding unit 107 has 0 or 1 as the expected value. The expected value holding unit 107 holds the acquired expected value at the computation start time.

The expected value comparison unit 108 determines whether or not the inverted spin state is equal to the expected value, and outputs the determination result. For example, the expected value comparison unit 108 receives an input of the inverted spin state of the own spin from the spin state management unit 102. The expected value comparison unit 108 acquires the expected value of the own spin from the expected value holding unit 107. The expected value comparison unit 108 compares the inverted spin state of the own spin with the expected value. If the inverted spin state of the own spin is not equal to the expected value, the expected value comparison unit 108 generates the inversion candidate flag indicating that the own spin is the inversion candidate. If the inverted spin state of the own spin is equal to the expected value, the expected value comparison unit 108 generates the inversion candidate flag indicating that the own spin is not the inversion candidate. Thereafter, the expected value comparison unit 108 outputs the generated inversion candidate flag to the signal selector circuit 105.

The signal selector circuit 105 receives an input of the inversion candidate flag based on the inversion determination formula from the inversion candidate flag generation unit 104. The signal selector circuit 105 also receives an input of the inversion candidate flag based on the expected value from the expected value comparison unit 108.

In a case where the Ising computing device 1 starts operation and performs initialization, the signal selector circuit 105 receives an input of the initialization signal from the initial setting control unit 80. If the initialization signal is on, the signal selector circuit 105 outputs the inversion candidate flag acquired from the expected value comparison unit 108 to the inversion spin selection unit 50. Accordingly, during initialization execution, a spin whose inverted spin state is equal to the expected value is set as the inversion candidate spin regardless of an increase or decrease in energy.

When the initialization is completed and the initialization signal is turned off, the signal selector circuit 105 outputs the inversion candidate flag acquired from the inversion candidate flag generation unit 104 to the inversion spin selection unit 50. For example, after the initialization is completed, a spin whose inverted spin state satisfies the inversion determination formula is set as the inversion candidate spin.

Returning to FIG. 1, the description is continued. The inversion spin selection unit 50 acquires the spin number of the own spin in each annealing unit 10 from the spin number holding unit 106 of the annealing unit 10. The inversion spin selection unit 50 receives an input of the change amount of energy from the energy change amount calculation unit 103 of each annealing unit 10. The inversion spin selection unit 50 receives an input of the inversion candidate flag from the signal selector circuit 105 of each annealing unit 10. The inversion spin selection unit 50 receives an input of the random number from the random number generation unit 40.

The inversion spin selection unit 50 checks the inversion candidate flags acquired from the respective annealing units 10, and determines whether or not there is an inversion candidate spin which is a spin having the inversion candidate flag indicating that the spin is the inversion candidate.

If there are inversion candidate spins, the inversion spin selection unit 50 selects one inversion candidate spin from among the acquired inversion candidate spins according to the random number acquired from the random number generation unit 40. The inversion spin selection unit 50 confirms the selected inversion candidate spin as the inversion spin. Thereafter, the inversion spin selection unit 50 outputs a notification of the confirmation of the inversion spin as well as the spin number and the spin state of the inversion spin to the annealing units 10, the energy calculation unit 60, and the search result holding unit 70. The inversion spin selection unit 50 is an example of a "confirmation unit".

If there is no inversion candidate spin, the inversion spin selection unit 50 outputs the absence of the inversion candidate spin to the initial setting control unit 80. With this, the inversion spin selection unit 50 notifies the initial setting control unit 80 of the completion of the initialization.

In this manner, while the initialization signal is in an on state, the inversion spin selection unit 50 treats a spin having an inversion result equal to the expected value as an inversion candidate spin. Thus, while the initialization signal is in an on state, spins each having an inversion result equal to the expected value are inverted sequentially until there are no more inversion candidate spins, and the spin states of the spins equal to the respective expected values are obtained as initialized states. Thereafter, the initialization signal is turned off, and the optimal solution search processing is performed from the desired initialized states.

The energy calculation unit 60 has, for example, the initial values of the respective spins in which all the spin states are set to 0 in advance. The energy calculation unit 60 obtains and holds the energy in accordance with the formula (1) using the initial values of the respective spins.

Thereafter, the energy calculation unit 60 receives a notification of the confirmation of the inversion spin as well as an input of the spin number and the spin state of the inversion spin from the inversion spin selection unit 50. Next, the energy calculation unit 60 processes the spin states of the spins held therein by inverting the spin state of the spin having each spin number notified by the inversion spin selection unit 50, and thereby generates new spin states of the spins.

The energy calculation unit 60 acquires a change amount of energy in a case where the spin state of the inversion spin is inverted from the inversion spin selection unit 50. The energy calculation unit 60 updates the held energy by setting, as new energy, a sum of the acquired change amount of energy and the already held energy.

The energy calculation unit 60 holds the spin states of the spins in the state where the spin state of the inversion spin is inverted. The energy calculation unit 60 outputs the calculated energy in the state where the spin state of the inversion spin is inverted to the search result holding unit 70.

The search result holding unit 70 sets initial energy as an initial value of lowest energy. Next, the search result holding unit 70 receives an input of information on the calculated energy from the energy calculation unit 60. The search result holding unit 70 receives an input of the spin number and the spin state of the inversion spin from the inversion spin selection unit 50.

The search result holding unit 70 compares the acquired energy with the held lowest energy. If the acquired energy is less than the lowest energy, the search result holding unit 70 sets the acquired energy as the lowest energy. The search result holding unit 70 holds the spin states of the spins achieving the acquired energy. On the other hand, if the acquired energy is equal to or more than the lowest energy, the search result holding unit 70 continues to hold the lowest energy and the spin states of the spins already held. The search result holding unit 70 is an example of a "search unit".

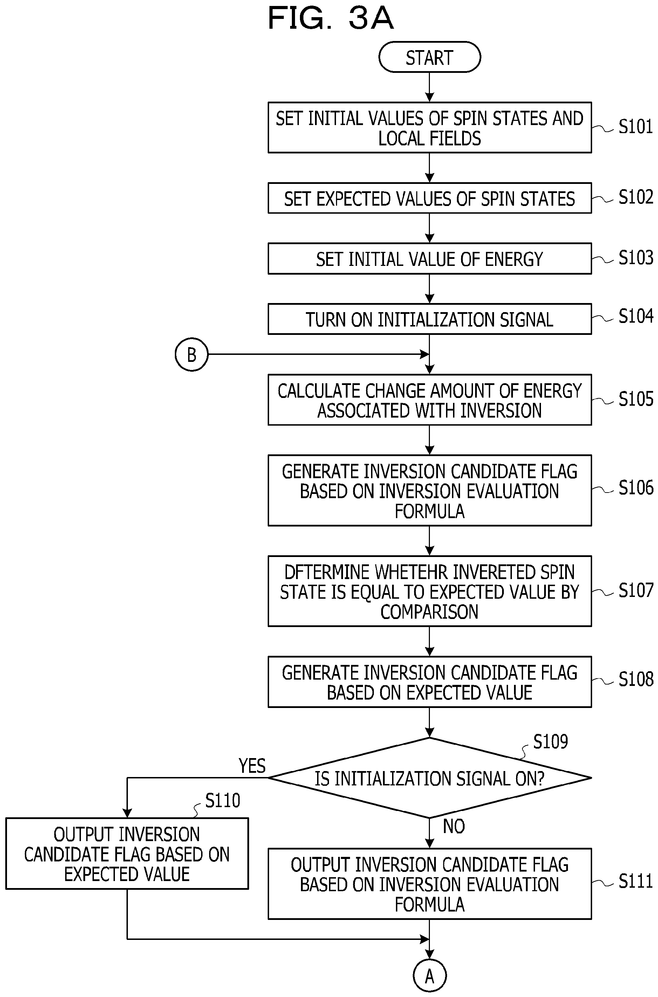

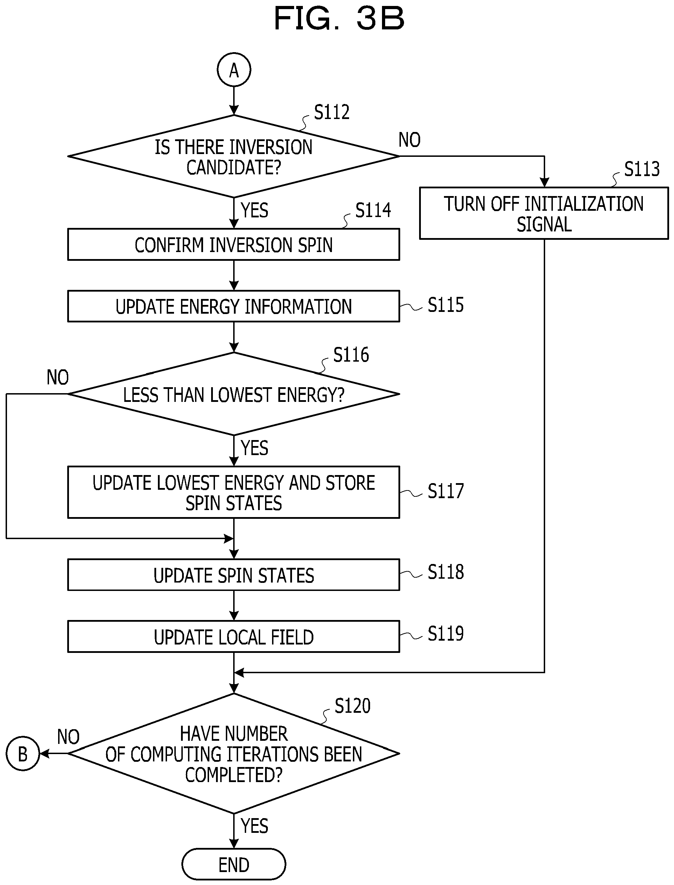

Next, with reference to FIGs. 3A and 3B, description will be given of a sequence of optimal solution search processing by the Ising computing device 1 according to the present embodiment. FIGs. 3A and 3B are a flowchart of optimal solution search processing by the Ising computing device according to Embodiment 1.

Based on input information from an operator or the like, the spin number of the own spin is set in the spin number holding unit 106, and the initial value of the spin state of the own spin is set in the spin state management unit 102 of each annealing unit 10. Here, the spin states of the spins are all 0. In the local field management unit 101, the initial value of the local field for the own spin is set (step S101). In this case, since the spin state of each spin is 0, the local field is a bias term of the spin.

In the expected value holding unit 107, the expected value of the own spin at the computation start time is set based on the input information from the operator or the like (step S102).

The energy calculation unit 60 acquires the initial values of the spin states of the respective spins based on the input information from the operator or the like, and acquires and sets the initial value of energy from the acquired spin states of the spins (step S103). In this case, since the spin states of all the spins are 0, the energy is a constant term itself.

The initial setting control unit 80 outputs an initialization signal to the signal selector circuits 105 of the annealing units 10 to turn on the initialization signal (step S104).

The energy change amount calculation unit 103 of each annealing unit 10 acquires information on the local field held by the local field management unit 101. The energy change amount calculation unit 103 receives an input of the inverted spin state of the own spin from the spin state management unit 102. The energy change amount calculation unit 103 calculates a change amount of energy associated with the inversion of the own spin by using formula (2) (step S105). Thereafter, the energy change amount calculation unit 103 outputs the calculated change amount of energy associated with the inversion of the own spin to the inversion candidate flag generation unit 104 and the inversion spin selection unit 50.

The inversion candidate flag generation unit 104 receives an input of the change amount of energy associated with the inversion of the own spin from the energy change amount calculation unit 103. The inversion candidate flag generation unit 104 receives an input of the value of the right side of the formula (6) to be used as the threshold from the threshold generation unit 30. The inversion candidate flag generation unit 104 determines whether or not the acquired change amount of energy satisfies the inversion determination formula in which the value acquired from the threshold generation unit 30 is substituted into the right side of the formula (6), and generates the inversion candidate flag based on the inversion determination formula (step S106). Thereafter, the inversion candidate flag generation unit 104 outputs the inversion candidate flag based on the inversion determination formula to the signal selector circuit 105.

In addition, the expected value comparison unit 108 compares the expected value acquired from the expected value holding unit 107 with the inverted spin state of the own spin acquired from the spin state management unit 102 to determine whether the two values are equal to each other (step S107).

Next, based on the comparison result, the expected value comparison unit 108 generates the inversion candidate flag based on the expected value (step S108). Thereafter, the expected value comparison unit 108 outputs the inversion candidate flag based on the expected value to the signal selector circuit 105.

The signal selector circuit 105 receives an input of the inversion candidate flag based on the inversion determination formula from the inversion candidate flag generation unit 104. The signal selector circuit 105 also receives an input of the inversion candidate flag based on the expected value from the expected value comparison unit 108. The signal selector circuit 105 determines whether the initialization signal is on (step S109).

If the initialization signal is on (step S109: Yes), the signal selector circuit 105 outputs the inversion candidate flag based on the expected value acquired from the expected value comparison unit 108 to the inversion spin selection unit 50 (step S110).

On the other hand, if the initialization signal is off (step S109: No), the signal selector circuit 105 outputs the inversion candidate flag based on the inversion determination formula acquired from the inversion candidate flag generation unit 104 to the inversion spin selection unit 50 (step S111).

The inversion spin selection unit 50 receives inputs of the spin numbers of the own spins in the respective annealing units 10 as well as the spin states, the change amounts of energies, and the inversion candidate flags from the annealing units 10. The inversion spin selection unit 50 determines whether or not there is an inversion candidate spin based on the inversion candidate flags (step S112).

If there is no inversion candidate spin (step S112: No), the inversion spin selection unit 50 notifies the initial setting control unit 80 of the absence of the inversion candidate spin. In response to reception of the notification of the absence of the inversion candidate spin, the initial setting control unit 80 stops outputting the initialization signal to the signal selector circuit 105 to turn off the initialization signal (step S113).

On the other hand, if there are inversion candidate spins (step S112: Yes), the inversion spin selection unit 50 selects one inversion candidate spin from among the inversion candidate spins acquired from the annealing units 10 according to the random number value input from the random number generation unit 40. The inversion spin selection unit 50 confirms the selected inversion candidate spin as the inversion spin (step S114). Thereafter, the inversion spin selection unit 50 outputs a notification of the confirmation of the inversion spin as well as the spin number and the spin state of the inversion spin to the energy calculation unit 60 and the search result holding unit 70.

When receiving the notification of the confirmation of the inversion spin, the energy calculation unit 60 processes the held spin states of the spins by inverting the spin state of the spin having each spin number acquired from the inversion spin selection unit 50. The energy calculation unit 60 acquires a change amount of energy in a case where the spin state of the inversion spin is inverted from the inversion spin selection unit 50. Then, the energy calculation unit 60 updates the held information on the energy by setting, as new energy, the sum of the acquired change amount of energy and the already held energy (step S115).

Thereafter, the energy calculation unit 60 outputs the calculated energy to the search result holding unit 70. The search result holding unit 70 determines whether the energy acquired from the energy calculation unit 60 is less than the held lowest energy (step S116). If the energy acquired from the energy calculation unit 60 is equal to or more than the held lowest energy (step S116: No), the optimal solution search processing proceeds to step S118.

On the other hand, if the energy acquired from the energy calculation unit 60 is less than the held lowest energy (step S116: Yes), the search result holding unit 70 updates the held lowest energy by setting, as the lowest energy, the energy acquired from the energy calculation unit 60. The search result holding unit 70 stores, as new spin states achieving the lowest energy, the spin states of the spins in which the spin state of the inversion spin is inverted among the held spin states of the spins (step S117).

Each annealing unit 10 receives an input of the confirmation of the inversion spin together with the spin number of the inversion spin from the inversion spin selection unit 50. If the inversion spin confirmed to be inverted is the own spin, the spin state management unit 102 updates the spin state of the own spin (step S118).

The local field management unit 101 calculates the change amount of the local field in accordance with the formula (4) using the spin number of the inversion spin confirmed to be inverted. The local field management unit 101 calculates the local field for the own spin by using the calculated change amount of the local field and the information of the local field held by itself. Thereafter, the local field management unit 101 updates the held information on the local field by setting the information on the calculated local field as the information on the current local field (step S119).

After that, the search result holding unit 70 determines whether a predetermined number of computing iterations have been completed (step S120). If the predetermined number of computing iterations have not been completed (step S120: No), the optimal solution search processing returns to step S105. On the other hand, if the predetermined number of computing iterations have been completed (step S120: Yes), the search result holding unit 70 determines the spin states achieving the lowest energy held at that time as the optimal solution, and ends the optimal solution search processing.

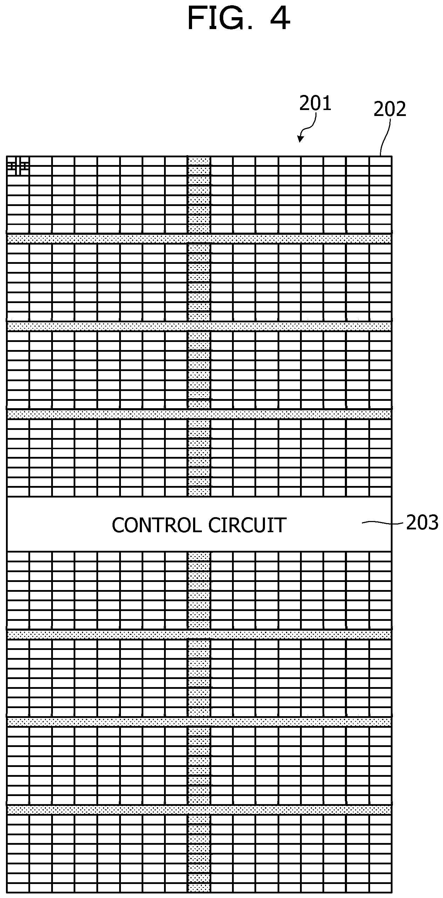

FIG. 4 is a diagram of an arrangement configuration of the Ising computing device. The Ising computing device 1 according to the present embodiment is equivalent to an annealing circuit 201 in FIG. 4. The annealing circuit 201 is a functional unit capable of executing annealing. Each annealing circuit 201 includes a plurality of unit circuits 202 and a control circuit 203. For example, one annealing circuit 201 is equipped with 1024 unit circuits 202. The unit circuit 202 is a logical unit for implementation that makes a determination and status management for one spin, and serves as the annealing unit 10. The control circuit 203 is a circuit that performs control in the annealing circuit 201, and serves as the energy calculation unit 60, the search result holding unit 70, and so forth. For example, the control circuit 203 selects, as the inversion candidate spin, any one of the own spins handled by the respective unit circuits 202, accepts the inversion candidate spin, and makes a notification to the unit circuits 202 upon confirmation of the inversion spin.

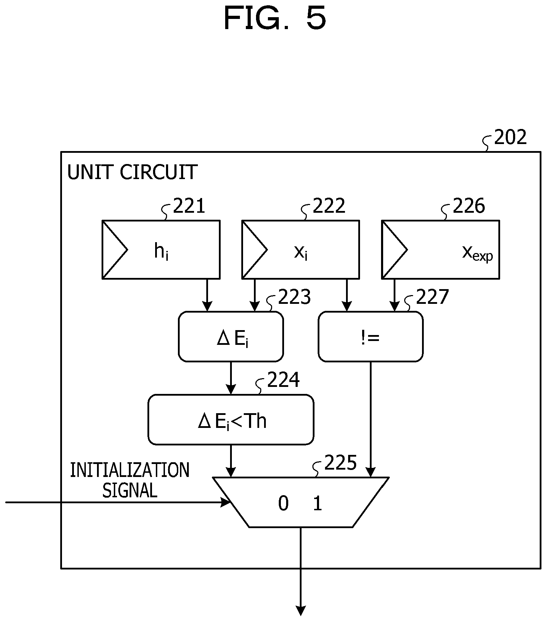

FIG. 5 is a diagram illustrating a circuit image of a unit circuit. A register 221 illustrated in FIG. 5 is an example of the local field management unit 101. Here, $h_i$ represents the value of the local field. A register 222 is an example of the spin state management unit 102. Here, $x_i$ represents the spin state of the spin $x_i$.

A circuit 223 is an example of the energy change amount calculation unit 103. The circuit 223 calculates a change amount of energy $\Delta E_i$ using the local field $h_i$ and the spin state of the spin $x_i$.

A circuit 224 is an example of the inversion candidate flag generation unit 104. The circuit 224 compares the change amount of energy $\Delta E_i$ with a threshold Th, and outputs the value of the inversion candidate flag.

A register 226 is an example of the expected value holding unit 107. Here, $x_{exp}$ represents the expected value.

A circuit 227 is an example of the expected value comparison unit 108. The circuit 227 compares the spin state of the spin $x_i$ with the expected value $x_{exp}$ and outputs the value of the inversion candidate flag.

A selector circuit 225 is an example of the signal selector circuit 105. When receiving an input of the initialization signal, the selector circuit 225 selects and outputs the value of the inversion candidate flag input from the circuit 227. When not receiving an input of the initialization signal, the selector circuit 225 selects and outputs the value of the inversion candidate flag input from the circuit 224.

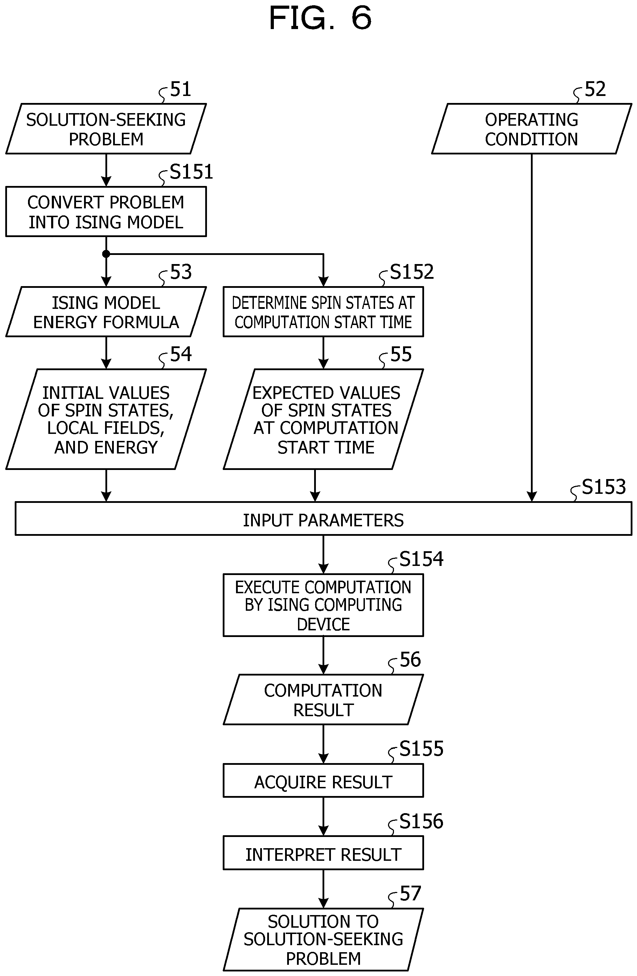

FIG. 6 is a flowchart of processing in using the Ising computing device according to Embodiment 1. Here, a person who uses the Ising computing device 1 is referred to as a user.

There is a solution-seeking problem 51 that the user desires to solve. The user performs problem conversion of converting the solution-seeking problem into an Ising model by using a computer or the like (step S151). As a result, an Ising model energy formula 53 represented by the formula (1) is obtained. Initial values 54 of the spin states, the local fields, and the energy are acquired.

In addition, after the problem conversion into the Ising model, the user determines the spin states at the computation start time (step S152). Thus, expected values 55 of the spin states at the computation start time are acquired.

Next, the Ising model energy formula 53, the initial values 54 of the spin states, the local fields, and the energy, and the expected values 55 are input as parameters to the Ising computing device 1. An operating condition 52 for executing the optimal solution search processing, such as the number of computing iterations, is also input as a parameter to the Ising computing device 1 (step S153).

After that, the Ising computing device 1 executes the computation (step S154). This processing is the optimal solution search processing by the Ising computing device 1 described above. As a result of the execution of this computation, a computation result 56 is obtained.

The user acquires the computation result 56 (step S155). The user interprets the acquired computation result 56 (in step S156). Thus, the user obtains a solution-seeking problem solution 57 to the solution-seeking problem 51.

As described above, the Ising computing device according to the present embodiment performs spin state inversion such that the spin state of each spin is equal to the expected value, and thereby generates the desired initial states. The Ising computing device obtains a solution by executing the optimal solution search processing from the generated initial states. Thus, it is possible to start the optimal solution search processing in the Ising computing device from the desired spin states, and to reach the lowest energy in a shorter time. Since the local fields are calculated in parallel for the respective spins, the computing speed is higher than that in a case where the computation for obtaining the initial states is executed by software. Therefore, it is possible to improve the processing performance of the Ising computing device for the combinatorial optimization problem.

The Ising computing device according to the present embodiment is modified in terms of the method for selecting the inversion candidates until the transition to the initial states is completed, but remains the same in terms of the calculations of the energy and the local fields as in the related art. Therefore, after the expected initial states are reached, it is possible to obtain correct values by performing the optimal solution search processing in the related art. The Ising computing device also achieves suppression of an increase in physical resources.

For example, an Ising computing device capable of calculating N bits of spins executes calculation in an order of steps of the square of N in the case of calculating the energy and the local fields of the spins. In contrast, the Ising computing device according to the present embodiment is capable of executing the above calculation in N steps even in the worst case, although the number of steps depends on the number of spins to be inverted. When the number of spins to be handled is about 1024, the computing speed is about 1024 times faster in terms of the number of steps. Since the software also entails latency of memory access and the like, even higher effect may be expected. As compared with the time for transferring interaction coefficients for problem setting or the time for computing the energy search, the time for transition to the initial states has a negligible value.

In the above description, the operator determines the expected values and inputs the expected values to the Ising computing device, but embodiments are not limited to this. For example, the Ising computing device may be internally equipped with a function to create the expected values and set up the spin states of spins equal to the expected values. In this case, the Ising computing device is enabled to make a transition to certain states internally. Such a function may be applied to, for example, a bit operation such as parallel tempering with isoenergetic cluster moves (PTICM). Using such a function, the Ising computing device is also enabled to perform processing of resetting the spin states of all the spins to 1.

[Embodiment 2]

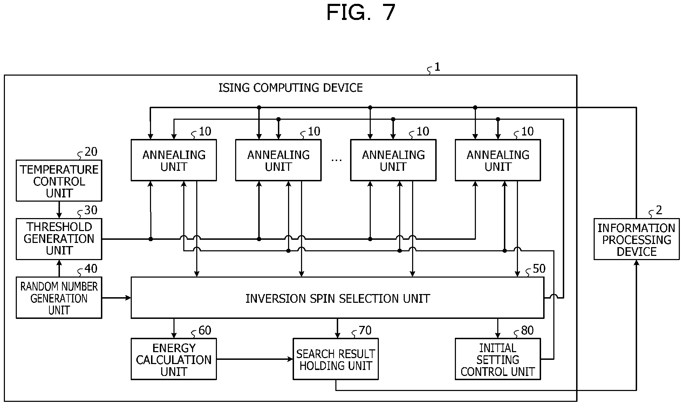

FIG. 7 is a block diagram illustrating an information processing system according to Embodiment 2. An Ising computing device 1 according to the present embodiment executes optimal solution search processing while resolving a constraint condition of the problem in cooperation with processing by software. In the following description, some of the same operations of the units as those in Embodiment 1 will be omitted.

Some combinatorial optimization problems have a constraint condition for values to be used in a combination. An example of a constraint condition is that, in a case where bits each representing a spin are allocated, n bits in a predetermined number of bits of spins are 1. This constraint condition is called an "n-hot constraint". A case of solving an optimization problem having such a constraint condition will be described.

The annealing unit 10 receives setting of an expected value of each spin in a desired initial state. Thereafter, after the computation result is confirmed, the annealing unit 10 receives an input of the computation result adjusted to satisfy a predetermined constraint condition, and sets the spin state in the acquired adjusted computation result as the expected value.

The search result holding unit 70 holds the search result achieving the lowest energy after the end of a predetermined number of computing iterations. This search result does not necessarily satisfy the constraint condition. Thus, the search result holding unit 70 outputs the computation result to an information processing device 2 that executes software.

The units in the Ising computing device 1 generate the initial states by using the expected values, start the optimal solution search processing from the generated initial states, and acquire a computation result.

Thereafter, when the computation result adjusted by the software to satisfy the constraint condition is input, the Ising computing device 1 generates the initial states by using the newly set expected values, starts the optimal solution search processing from the generated initial states, and acquires a computation result. The Ising computing device 1 iterates the exchange of the computation result with the software a predetermined number of times and thereafter ends the computation.

The software executed by the information processing device 2 receives an input of a computation result from the search result holding unit 70. The software determines whether the input computation result satisfies the constraint condition. If the computation result satisfies the constraint condition, the software transmits the spin states in the computation result as they are to the annealing units 10 of the Ising computing device 1. On the other hand, if the computation result does not satisfy the constraint condition, the software adjusts the computation result so as to satisfy the constraint condition, and transmits the adjusted spin states of the spins as the expected values to the annealing units 10 to cause the annealing units 10 to store them.

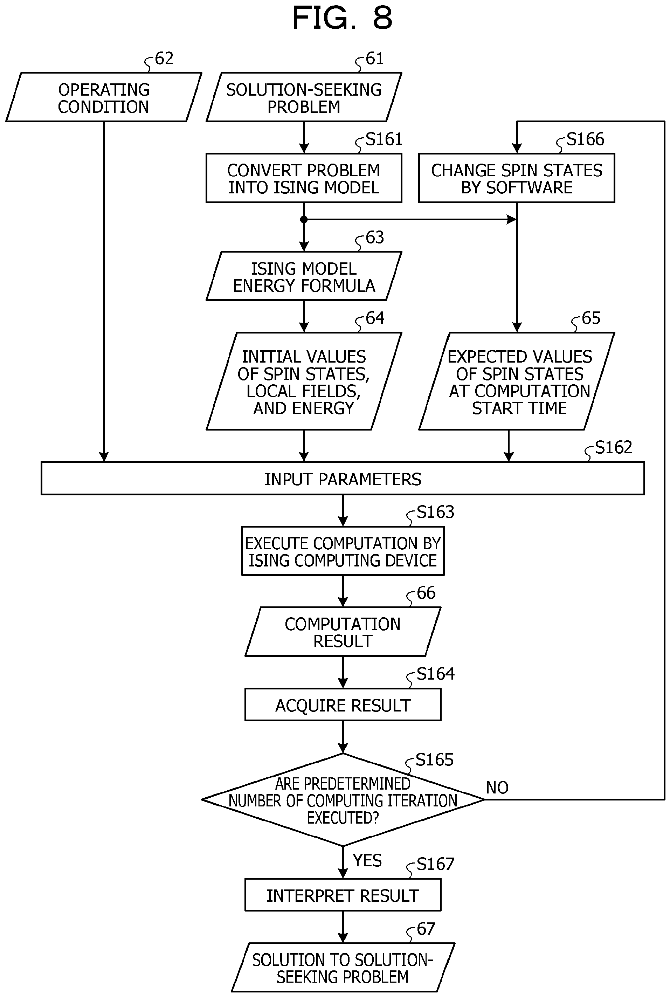

FIG. 8 is a flowchart of processing in using the Ising computing device cooperating with the software. Hereinafter, a sequence of problem solving processing in the case of using the Ising computing device 1 according to the present embodiment will be described with reference to FIG. 8.

There is a solution-seeking problem 61 that a user desires to solve. The user performs problem conversion of converting the solution-seeking problem into an Ising model by using a computer or the like (step S161). As a result, an Ising model energy formula 63 represented by the formula (1) is obtained. Initial values 64 of the spin states, the local fields, and the energy are acquired.

After the problem conversion into the Ising model, the user determines the spin states at the computation start time so as to satisfy the constraint condition for computation. Thus, expected values 65 of the spin states at the computation start time are acquired.

Next, the Ising model energy formula 63, the initial values 64 of the spin states, the local fields, and the energy, and the expected values 65 are input as parameters to the Ising computing device 1. An operating condition 62 for executing the optimal solution search processing, such as the number of computing iterations, is also input as a parameter to the Ising computing device 1 (step S162).

After that, the Ising computing device 1 executes the computation (step S163). This processing is the optimal solution search processing by the Ising computing device 1 described above. A computation result 66 is obtained by executing this computation (step S164).

The Ising computing device 1 determines whether or not a predetermined number of iterations of the computation using the computation result adjusted by the software has been executed (step S165).

If the number of iterations of the computation using the computation result 66 adjusted by the software as the expected values does not reach the predetermined number (step S165: No), the Ising computing device 1 transmits the computation result 66 to the information processing device 2. The software on the information processing device 2 receives an input of the computation result 66 and changes the spin states in the computation result 66 so as to satisfy the constraint condition for computation (step S166). Thereafter, the software on the information processing device 2 transmits the computation result 66 changed so as to satisfy the constraint condition for computation, as the expected values 65 of the spin states at the computation start time, to the Ising computing device 1. After that, the processing returns to step S162.

On the other hand, if the number of iterations of the computation using the computation result 66 adjusted by the software reaches the predetermined number (step S165: Yes), the user interprets the computation result 66 (step S167). Thus, the user obtains a solution-seeking problem solution 67 to the solution-seeking problem 61.

As described above, in the case of solving an optimization problem having a constraint condition, the Ising computing device according to the present embodiment performs the optimal solution search processing by using the spin states satisfying the constraint condition as the expected values. The Ising computing device iterates an operation in which, after the search result is adjusted by the software so as to satisfy the constraint condition, the optimal solution search processing is performed again by using the adjusted search result as the initial values. In this way, the Ising computing device is enabled to obtain a better solution to the optimization problem having the constraint condition than in a case where the Ising computing device solves the problem alone.

[Embodiment 3]

Next, Embodiment 3 will be described. As an example of a search method for optimal values, there has been proposed a method for searching for lowest energy by iterating a procedure of comparing spin states resulting from parallel computing by two systems, extracting spins having different values between the two systems, and exchanging some of the values. Such search method is called parallel tempering with isoenergetic cluster moves (PTICM). Such search method is disclosed in, for example, Z. Zhu, C. Fang, and H. G. Katzgramer, borealis - a generalized global update algorithm for Boolean optimization problems, arXiv: 1605.09399 (2016). In performing such search processing, an Ising computing device according to the present embodiment performs the search in cooperation with software by causing the software to execute a processing of exchanging the spin states of the extracted spins and acquiring the result of the processing. The Ising computing device 1 according to the present embodiment is also illustrated in the block diagram of FIG. 7.

The annealing units 10 first acquire, as expected values, for example, convenient values in which the spin states of all the spins are 0. Thereafter, after the search result is confirmed, the annealing units 10 receive inputs of the spin states of the respective spins to be used as the initial states in the next computation from the software on the information processing device 2. The annealing units 10 set, as the initial values for the next computation, the spin states acquired from the information processing device 2.

The units in the Ising computing device 1 execute optimal value search processing in two systems in parallel, and acquire the respective search results. The units in the Ising computing device 1 execute again the optimal value search processing in the two systems in parallel using the spin states input from the information processing device 2 to the annealing units 10 as the expected values, and acquire the respective search results. The units in the Ising computing device 1 execute a predetermined number of iterations of the computation using the spin states acquired from the information processing device 2 as the expected values.

The search result holding unit 70 acquires the held search results in the two systems. The search result holding unit 70 determines whether or not the predetermined number of iterations of the computation using the spin states acquired from the information processing device 2 as the expected values have been executed. If the number of iterations does not reach the predetermined number, the search result holding unit 70 outputs the search results in the two systems to the software. If the number of iterations reaches the predetermined number, the search result holding unit 70 ends the optimal solution search processing while holding the search results in the two systems at that time.

FIG. 8 also illustrates a flowchart of processing in using the Ising computing device according to the present embodiment. Hereinafter, processing different from Embodiment 2 will be described, and description of the other processing will be omitted.

In the present embodiment, the optimal solution search processing in the two systems is performed in parallel in step S163. The Ising computing device 1 acquires search results of the two systems as a computation result 66.

In step S165, the Ising computing device 1 determines whether or not a predetermined number of iterations of the computation using, as the expected values, the spin states exchanged between the two systems by the software have been executed (step S165).

If the number of iterations of the computation using the spin states changed by the software does not reach the predetermined number (step S165: No), the Ising computing device 1 transmits the computation result 66 to the information processing device 2. The software executed by the information processing device 2 compares the search results of the two systems included in the computation result 66 with each other and extracts spins having different spin states between the two systems. Next, the software executed by the information processing device 2 exchanges some of the extracted spins to change the spin states of the search results of the two systems (step S166). Thereafter, the software executed by the information processing device 2 transmits the changed spin states of the search results of the two systems as the expected values 65 to the Ising computing device 1. The processing returns to step S162.

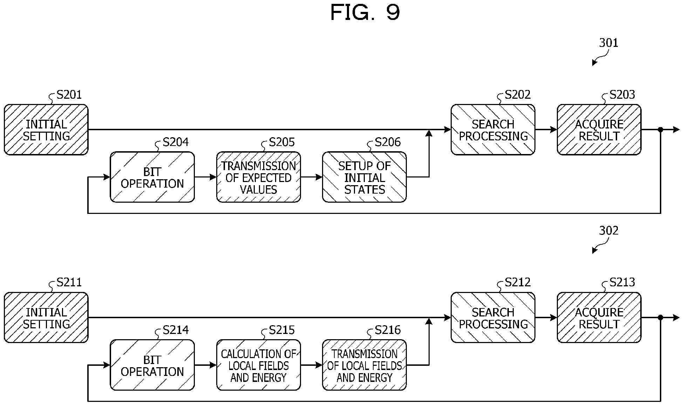

FIG. 9 is a diagram for explaining speed-up by cooperation with software. A flow 301 in FIG. 9 represents a sequence of optimal solution search processing by the Ising computing device 1 according to the present embodiment. A flow 302 represents a sequence of optimal solution search processing not using the expected values.

With reference to the flow 301, the optimal solution search processing by the Ising computing device 1 according to the present embodiment will be described. An initial setting of the Ising computing device 1 is made by an operator (step S201). In the present embodiment, a processing time for setting up the initial values may be considered to be zero, because the first expected values for the spin states of all the spins just have to be set to 0.

Next, the Ising computing device 1 executes a search processing for the two systems (step S202). Thus, the Ising computing device 1 acquires search results of the two systems (step S203).

Thereafter, if the number of iterations of the search processing does not reach the predetermined number, the Ising computing device 1 transmits the search results to the information processing device 2. The software executed by the information processing device 2 executes a bit operation on the search results of the two systems (step S204).

Next, the software executed by the information processing device 2 transmits the spin states of the spins of the two system, on which the bit operation is performed, as the expected values to the Ising computing device 1 (step S205).

The Ising computing device 1 sets up the initial states such that the spin state of each spin is equal to the acquired expected value (step S206). After that, the processing returns to the search processing in step S202.

In contrast to this, the optimal solution search processing by the Ising computing device 1 not using the expected values will be described with reference to the flow 302. An initial setting of the Ising computing device 1 is made by an operator (step S211). In this case, the spin states of all spins are set to 0. This processing is the same as the processing in step S201 of the flow 301.

Next, the Ising computing device 1 executes the search processing for the two systems (step S212). Thus, the Ising computing device 1 acquires search results of the two systems (step S213). These processing are the same as the processing in steps S202 and S203 of the flow 301.

Thereafter, if the number of iterations of the search processing does not reach the predetermined number, the Ising computing device 1 transmits the search results to the information processing device 2. The software executed by the information processing device 2 executes a bit operation on the search results of the two systems (step S214).

Next, the software executed by the information processing device 2 calculates the local fields and the energy from the spin states of the spins in the two system on which the bit operation is performed (step S215). Thereafter, the software executed by the information processing device 2 transmits the information on the calculated local fields and energy to the Ising computing device 1 (step S216).

The Ising computing device 1 sets the acquired local fields and energy as the initial values and returns to the search processing in step S212.

In this case, the calculation of the local fields and the energy after the spin state exchange executed by the software in step S215 involves a large number of computations and accordingly requests a large overhead in terms of computation time. In contrast, in the processing in steps S205 and S206 of the flow 301, the Ising computing device acquires the spin states after the exchange and sets up the initial states, so that the computation time may be reduced.

As described above, in a case of solving an optimization problem by using the method called PTICM, the Ising computing device according to the present embodiment iterates the optimal solution search processing by using, as the initial values, the spin states of the spins in which specific spin states in the two systems are exchanged by the software. In the related art, in a case of solving an optimization problem using the method called PTICM, the processing of calculating the local fields and the energy after the spin state exchange and transmitting the calculation result to the Ising computing device is performed every time. In contrast, the Ising computing device according to the present embodiment performs the second and later iterations of the computation by acquiring the spin states after the exchange by the software as the expected values to be used for resuming the computation. Therefore, it is possible to shorten the execution time of the optimal solution search processing.

The software executed by the information processing device 2 described in Embodiments 2 and 3 is an example of a "state change unit". In Embodiments 2 and 3, the Ising computing device 1 that searches for the optimal solution and the information processing device 2 that executes the software are described as different devices, but these may be incorporated into the same apparatus to form a single optimization apparatus.

**Claims**

1. An optimization apparatus (1) comprising:

    a temperature control unit (20) being a circuit configured to control a temperature value indicating a temperature;
    a plurality of annealing units (10), each annealing unit (10) of the plurality of annealing units (10) being a circuit configured to hold a state of a respective one of a plurality of state variables included in an evaluation function representing energy, and each annealing unit (10) of the plurality of annealing units (10) comprising:

        an energy change amount calculation unit (103) configured to calculate a change amount of the energy represented by the evaluation function in a case where a state transition is performed by changing a state of the state variable held by the annealing unit (10), the state being represented by 0 or 1;
        a determination unit (104) configured to stochastically determine whether or not to accept the state transition based on a comparison between the change amount of the energy and a threshold calculated based on the temperature value and a random number value;
        an expected value holding unit (107) configured to hold an expected value of the state of the state variable held by the annealing unit (10), the expected value representing a predetermined initial state; and
        an expected value comparison unit (108) configured to compare the expected value held by the expected value holding unit (107) with the value of the state of the state variable held by the annealing unit (10) and to output an indication of whether the expected value held by the expected value holding unit (107) is not equal to the value of the state of the state variable held by the annealing unit (10);

    a confirmation unit (50) configured to:

        during an initialization execution, select a state variable whose value is not equal to the expected value of the state variable held by the expected value holding unit (107) based on the output of the expected value comparison unit (108) of each of the plurality of annealing units (10), and to change the state of the selected state variable into other state until the values of the states of the state variables are all equal to the expected values to obtain spin states of spins equal to the respective expected values as initialized states ; and
        after the initialization execution, select a state variable for which the state transition is accepted by the corresponding determination unit (104) and to change the state of the selected state variable;

    an energy calculation unit (60) configured to calculate post-transition energy after the state of the state variable selected by the confirmation unit (50) is changed; and
    a search unit (70) configured to set the post-transition energy as lowest energy in a case where the post-transition energy calculated by the energy calculation unit (60) is less than the lowest energy.

2. The optimization apparatus (1) according to claim 1, further comprising:

an initial setting control unit (80) configured to output an initialization signal while the states of the state variables are not all equal to the expected values, and to stop outputting the initialization signal when the states of the state variables become all equal to the expected values,

wherein the confirmation unit (50) is configured to cause the confirmation unit (50) to select the state variable of which the expected value held by the corresponding expected value holding unit (107) does not match the value of the state of the state variable held by the corresponding annealing unit (10) while the initial setting control unit (80) outputs the initialization signal, and to cause the confirmation unit (50) to select the state variable for which the state transition is accepted by the determination unit (104) while the initial setting control unit (80) is stopped from outputting the initialization signal.

3. An optimization method implemented on the optimization apparatus (1) of claim 1, the method comprising:

during an initialization execution:

comparing each of predetermined expected values of states of a plurality of state variables included in an evaluation function representing energy with a corresponding one of values of the states of the state variables held by a plurality of annealing units, each expected value representing a predetermined initial state and the state being represented by 0 or 1;

for each of the state variables, outputting an indication of whether the expected value is not equal to the value of the state of the state variable held by the corresponding annealing unit (10);

selecting a state variable whose value is not equal to the expected value of the state variable held by an expected value holding unit (107) based on the output indications; and

changing the state of the selected state variable into other state until the values of the states of the state variables are all equal to the expected values to obtain spin states of spins equal to the respective expected values as initialized states and

after the initialization execution:

controlling a temperature value indicating a temperature;

calculating a change amount of the energy represented by the evaluation function in a case where a state transition is performed by changing the state of any one of the plurality of state variables;

stochastically determining whether or not to accept the state transition based on a comparison between the change amount of the energy and a threshold calculated based on the temperature value and a random number value;

selecting the state variable for which the state transition is accepted and changing the state of the selected state variable;

calculating post-transition energy after the state of the state variable is changed; and

setting the post-transition energy as lowest energy in a case where the calculated post-transition energy is less than the lowest energy.

4. An optimization program which, when executed on the optimization apparatus (1) of claim 1, causes the optimization apparatus to execute a processing comprising:

during an initialization execution:

comparing each of predetermined expected values of states of a plurality of state variables included in an evaluation function representing energy with a corresponding one of values of the states of the state variables held by a plurality of annealing units, each expected value representing a predetermined initial state and the state being represented by 0 or 1;

for each of the state variables, outputting an indication of whether the expected value is not equal to the value of the state of the state variable held by the corresponding annealing unit (10);

selecting a state variable whose value is not equal to the expected value of the state variable held by an expected value holding unit (107) based on the output indications; and

changing the state of the selected state variable into other state until the values of the states of the state variables are all equal to the expected values to obtain spin states of spins equal to the respective expected values as initialized states and,

after the initialization execution:

controlling a temperature value indicating a temperature;

calculating a change amount of the energy represented by the evaluation function in a case where a state transition is performed by changing the state of any one of the plurality of state variables;

stochastically determining whether or not to accept the state transition based on a comparison between the change amount of the energy and a threshold calculated based on the temperature value and a random number value;

selecting the state variable for which the state transition is accepted and changing the state of the selected state variable;

calculating post-transition energy after the state of the state variable is changed; and

setting the post-transition energy as lowest energy in a case where the calculated post-transition energy is less than the lowest energy.

**Patentansprüche**

1. Optimierungsvorrichtung (1), umfassend:

eine Temperatursteuereinheit (20), die eine Schaltung ist, die konfiguriert ist, um einen Temperaturwert zu steuern, der eine Temperatur angibt;

eine Vielzahl von Glüheinheiten (10), wobei jede Glüheinheit (10) der Vielzahl von Glüheinheiten (10) eine Schaltung ist, die konfiguriert ist, um einen Zustand einer jeweiligen einer Vielzahl von Zustandsvariablen zu halten, die in eine Energie repräsentierende Bewertungsfunktion eingeschlossen sind, und wobei jede Glüheinheit (10) der Vielzahl von Glüheinheiten (10) Folgendes umfasst:

eine Energieänderungsbetragsberechnungseinheit (103), die konfiguriert ist, um einen Änderungsbetrag der durch die Bewertungsfunktion repräsentierten Energie in einem Fall zu berechnen, in dem ein Zustandsübergang durchgeführt wird, indem ein Zustand der von der Glüheinheit (10) gehaltenen Zustandsvariablen geändert wird, wobei der Zustand durch 0 oder 1 repräsentiert ist;

eine Bestimmungseinheit (104), die konfiguriert ist, um stochastisch zu bestimmen, ob der Zustandsübergang basierend auf einem Vergleich zwischen dem Änderungsbetrag der Energie und einem Schwellenwert, der basierend auf dem Temperaturwert und einem Zufallszahlenwert berechnet wird, akzeptiert wird oder nicht;

eine Erwartungswerthalteeinheit (107), die konfiguriert ist, um einen Erwartungswert des Zustands der Zustandsvariablen zu halten, der von der Glüheinheit (10) gehalten wird, wobei der Erwartungswert einen vorbestimmten Initialzustand repräsentiert; und

eine Erwartungswertvergleichseinheit (108), die konfiguriert ist, um den von der Erwartungswerthalteeinheit (107) gehaltenen Erwartungswert mit dem Wert des Zustands der von der Glüheinheit (10) gehaltenen Zustandsvariablen zu vergleichen und eine Angabe darüber auszugeben, ob der von der Erwartungswerthalteeinheit (107) gehaltene Erwartungswert nicht gleich dem Wert des Zustands der von der Glüheinheit (10) gehaltenen Zustandsvariablen ist; eine Bestätigungseinheit (50), die konfiguriert ist, um:

während einer Initialisierungsausführung eine Zustandsvariable auszuwählen, deren Wert nicht gleich dem Erwartungswert der Zustandsvariablen ist, die von der Erwartungswerthalteeinheit (107) gehalten wird, basierend auf der Ausgabe der Erwartungswertvergleichseinheit (108) von jeder der Vielzahl von Glüheinheiten (10), und den Zustand der ausgewählten Zustandsvariablen in einen anderen Zustand zu ändern, bis die Werte der Zustände der Zustandsvariablen alle gleich den Erwartungswerten sind, um Spinzustände von Spins zu erhalten, die gleich den jeweiligen Erwartungswerten als initialisierte Zustände sind; und

nach der Initialisierungsausführung eine Zustandsvariable auszuwählen, für die der Zustandsübergang von der entsprechenden Bestimmungseinheit (104) akzeptiert wird, und den Zustand der ausgewählten Zustandsvariablen zu ändern;

eine Energieberechnungseinheit (60), die konfiguriert ist, um die Energie nach dem Übergang zu berechnen, nachdem der Zustand der von der Bestätigungseinheit (50) ausgewählten Zustandsvariablen geändert worden ist; und

eine Sucheinheit (70), die konfiguriert ist, um die Energie nach dem Übergang als niedrigste Energie einzustellen, in einem Fall, in dem die von der Energieberechnungseinheit (60) berechnete Energie nach dem Übergang kleiner als die niedrigste Energie ist.

2. Optimierungsvorrichtung (1) nach Anspruch 1, weiter umfassend:

> eine Initialeinstellungssteuereinheit (80), die konfiguriert ist, um ein Initialisierungssignal auszugeben, während die Zustände der Zustandsvariablen nicht alle gleich den Erwartungswerten sind, und um das Ausgeben des Initialisierungssignals zu stoppen, wenn die Zustände der Zustandsvariablen alle gleich den Erwartungswerten werden,
> wobei die Bestätigungseinheit (50) konfiguriert ist, um die Bestätigungseinheit (50) zu veranlassen, die Zu-Zustandsvariable auszuwählen, deren Erwartungswert, der von der entsprechenden Erwartungswerthalteeinheit (107) gehalten wird, nicht mit dem Wert des Zustands der Zustandsvariablen übereinstimmt, der von der entsprechenden Glüheinheit (10) gehalten wird, während die Initialeinstellungssteuereinheit (80) das Initialisierungssignal ausgibt, und die Bestätigungseinheit (50) zu veranlassen, die Zustandsvariable auszuwählen, für die der Zustandsübergang von der Bestimmungseinheit (104) akzeptiert wird, während die Initialeinstellungssteuereinheit (80) vom Ausgeben des Initialisierungssignals gestoppt ist.

3. Optimierungsverfahren, implementiert in der Optimierungsvorrichtung (1) nach Anspruch 1, wobei das Verfahren Folgendes umfasst:
   während einer Initialisierungsausführung:

> Vergleichen jedes der vorbestimmten Erwartungswerte von Zuständen einer Vielzahl von Zustandsvariablen, die in eine Bewertungsfunktion eingeschlossen sind, die Energie repräsentiert, mit einem entsprechenden Wert der Zustände der Zustandsvariablen, die von einer Vielzahl von Glüheinheiten gehalten werden, wobei jeder Erwartungswert einen vorbestimmten Initialzustand repräsentiert und der Zustand durch 0 oder 1 repräsentiert ist;
> für jede der Zustandsvariablen das Ausgeben einer Angabe, ob der Erwartungswert nicht gleich dem Wert des Zustands der Zustandsvariablen ist, der von der entsprechenden Glüheinheit (10) gehalten wird; Auswählen einer Zustandsvariablen, deren Wert nicht gleich dem Erwartungswert der Zustandsvariablen ist, die von einer Erwartungswerthalteeinheit (107) gehalten wird, basierend auf den Ausgabenangaben; und
> Ändern des Zustands der ausgewählten Zustandsvariablen in einen anderen Zustand, bis die Werte der Zustände der Zustandsvariablen alle gleich den Erwartungswerten sind, um Spinzustände von Spins zu erhalten, die gleich den jeweiligen Erwartungswerten als initialisierte Zustände und nach der Initialisierungsausführung sind:

>> Steuern eines Temperaturwertes, der eine Temperatur angibt;
>> Berechnen eines Änderungsbetrags der durch die Bewertungsfunktion repräsentierten Energie in einem Fall, in dem ein Zustandsübergang durch Ändern des Zustands einer beliebigen der Vielzahl von Zustandsvariablen durchgeführt wird;
>> stochastisches Bestimmen, ob der Zustandsübergang basierend auf einem Vergleich zwischen dem Änderungsbetrag der Energie und einem Schwellenwert, der basierend auf dem Temperaturwert und einem Zufallszahlenwert berechnet wird, akzeptiert wird oder nicht;
>> Auswählen der Zustandsvariablen, für die der Zustandsübergang akzeptiert wird, und Ändern des Zustands der ausgewählten Zustandsvariablen;
>> Berechnen der Energie nach dem Übergang, nachdem der Zustand der Zustandsvariablen geändert worden ist; und
>> Einstellen der Energie nach dem Übergang als niedrigste Energie in einem Fall, in dem die berechnete Energie nach dem Übergang kleiner als die niedrigste Energie ist.

4. Optimierungsprogramm, das, wenn es auf der Optimierungsvorrichtung (1) nach Anspruch 1 ausgeführt wird, die Optimierungsvorrichtung veranlasst, eine Verarbeitung auszuführen, die Folgendes umfasst:
   während einer Initialisierungsausführung:

> Vergleichen jedes der vorbestimmten Erwartungswerte von Zuständen einer Vielzahl von Zustandsvariablen, die in eine Bewertungsfunktion eingeschlossen sind, die Energie repräsentiert, mit einem entsprechenden Wert der Zustände der Zustandsvariablen, die von einer Vielzahl von Glüheinheiten gehalten werden, wobei jeder Erwartungswert einen vorbestimmten Initialzustand repräsentiert und der Zustand durch 0 oder 1 repräsentiert ist;
> für jede der Zustandsvariablen das Ausgeben einer Angabe, ob der Erwartungswert nicht gleich dem Wert des Zustands der Zustandsvariablen ist, der von der entsprechenden Glüheinheit (10) gehalten wird;
> Auswählen einer Zustandsvariablen, deren Wert nicht gleich dem Erwartungswert der Zustandsvariablen ist, die

16

von einer Erwartungswerthalteeinheit (107) gehalten wird, basierend auf den Ausgabeangaben; und Ändern des Zustands der ausgewählten Zustandsvariablen in einen anderen Zustand, bis die Werte der Zustände der Zustandsvariablen alle gleich den Erwartungswerten sind, um Spinzustände von Spins zu erhalten, die gleich den jeweiligen Erwartungswerten als initialisierte Zustände sind, und, nach der Initialisierungsausführung:

Steuern eines Temperaturwertes, der eine Temperatur angibt;

Berechnen eines Änderungsbetrags der durch die Bewertungsfunktion repräsentierten Energie in einem Fall, in dem ein Zustandsübergang durch Ändern des Zustands einer beliebigen der Vielzahl von Zustandsvariablen durchgeführt wird;

stochastisches Bestimmen, ob der Zustandsübergang basierend auf einem Vergleich zwischen dem Änderungsbetrag der Energie und einem Schwellenwert, der basierend auf dem Temperaturwert und einem Zufallszahlenwert berechnet wird, akzeptiert wird oder nicht;

Auswählen der Zustandsvariablen, für die der Zustandsübergang akzeptiert wird, und Ändern des Zustands der ausgewählten Zustandsvariablen;

Berechnen der Energie nach dem Übergang, nachdem der Zustand der Zustandsvariablen geändert worden ist; und

Einstellen der Energie nach dem Übergang als niedrigste Energie in einem Fall, in dem die berechnete Energie nach dem Übergang kleiner als die niedrigste Energie ist.

## Revendications

1. Appareil (1) d'optimisation comprenant :

une unité (20) de commande de température qui est un circuit configuré pour commander une valeur de température indiquant une température ;

une pluralité d'unités (10) de recuit, chaque unité (10) de recuit de la pluralité d'unités (10) de recuit étant un circuit configuré pour conserver un état d'une variable respective d'une pluralité de variables d'état incluses dans une fonction d'évaluation représentant l'énergie, et chaque unité (10) de recuit de la pluralité d'unités (10) de recuit comprenant :

une unité (103) de calcul de quantité de changement d'énergie configurée pour calculer une quantité de changement de l'énergie représentée par la fonction d'évaluation dans un cas où une transition d'état est mise en œuvre en changeant un état de la variable d'état conservé par l'unité (10) de recuit, l'état étant représenté par 0 ou 1 ;

une unité (104) de détermination configurée pour déterminer de manière stochastique s'il faut ou non accepter la transition d'état sur la base d'une comparaison entre la quantité de changement de l'énergie et un seuil calculé sur la base de la valeur de température et d'une valeur de nombre aléatoire ;

une unité (107) de conservation de valeur attendue configurée pour conserver une valeur attendue de l'état de la variable d'état conservé par l'unité (10) de recuit, la valeur attendue représentant un état initial prédéterminé ; et

une unité (108) de comparaison de valeur attendue configurée pour comparer la valeur attendue conservée par l'unité (107) de maintien de valeur attendue à la valeur de l'état de la variable d'état conservé par l'unité (10) de recuit et pour délivrer en sortie une indication montrant si la valeur attendue conservée par l'unité (107) de maintien de valeur attendue n'est pas égale à la valeur de l'état de la variable d'état conservé par l'unité (10) de recuit ;

une unité (50) de confirmation configurée pour :

pendant une exécution d'initialisation, sélectionner une variable d'état dont la valeur n'est pas égale à la valeur attendue de la variable d'état conservée par l'unité (107) de conservation de valeur attendue sur la base de la sortie de l'unité (108) de comparaison de valeur attendue de chacune de la pluralité d'unités (10) de recuit,

et pour changer l'état de la variable d'état sélectionnée en un autre état jusqu'à ce que les valeurs des états des variables d'état soient toutes égales aux valeurs attendues pour obtenir des états de spin de spins égaux aux valeurs attendues respectives en tant qu'états initialisés ; et

après l'exécution d'initialisation, sélectionner une variable d'état pour laquelle la transition d'état est acceptée par l'unité (104) de détermination correspondante et pour changer l'état de la variable d'état sélectionnée ;

une unité (60) de calcul d'énergie configurée pour calculer l'énergie post-transition après le changement de l'état de la variable d'état sélectionnée par l'unité (50) de confirmation ; et
une unité (70) de recherche configurée pour définir l'énergie post-transition comme l'énergie la plus basse dans un cas où l'énergie post-transition calculée par l'unité (60) de calcul d'énergie est inférieure à l'énergie la plus basse.

2. Appareil (1) d'optimisation selon la revendication 1, comprenant en outre :

une unité (80) de commande de réglage initial configurée pour délivrer en sortie un signal d'initialisation tandis que les états des variables d'état ne sont pas tous égaux aux valeurs attendues, et pour arrêter la sortie du signal d'initialisation lorsque les états des variables d'état deviennent tous égaux aux valeurs attendues,
dans lequel l'unité (50) de confirmation est configurée pour amener l'unité (50) de confirmation à sélectionner la variable d'état dont la valeur attendue conservée par l'unité (107) de conservation de valeur attendue correspondante ne correspond pas à la valeur de l'état de la variable d'état conservée par l'unité (10) de recuit correspondante tandis que l'unité (80) de commande de réglage initial délivre en sortie le signal d'initialisation, et pour amener l'unité (50) de confirmation à sélectionner la variable d'état pour laquelle la transition d'état est acceptée par l'unité (104) de détermination tandis que l'unité (80) de commande de réglage initial arrête de délivrer en sortie le signal d'initialisation.

3. Procédé d'optimisation mis en œuvre sur l'appareil (1) d'optimisation selon la revendication 1, le procédé comprenant :
pendant une exécution d'initialisation :

la comparaison de chacune des valeurs attendues prédéterminées d'états d'une pluralité de variables d'état incluses dans une fonction d'évaluation représentant l'énergie à une valeur correspondante de valeurs des états des variables d'état conservées par une pluralité d'unités de recuit, chaque valeur attendue représentant un état initial prédéterminé et l'état étant représenté par 0 ou 1 ;
pour chacune des variables d'état, la sortie d'une indication montrant si la valeur attendue n'est pas égale à la valeur de l'état de la variable d'état conservée par l'unité (10) de recuit correspondante ;
la sélection d'une variable d'état dont la valeur n'est pas égale à la valeur attendue de la variable d'état conservée par une unité (107) de conservation de valeur attendue sur la base des indications de sortie ; et
le changement de l'état de la variable d'état sélectionnée en un autre état jusqu'à ce que les valeurs des états des variables d'état soient toutes égales aux valeurs attendues pour obtenir des états de spin de spins égaux aux valeurs attendues respectives en tant qu'états initialisés et après l'exécution d'initialisation :

la commande d'une valeur de température indiquant une température ;
le calcul d'une quantité de changement de l'énergie représentée par la fonction d'évaluation dans un cas où une transition d'état est mise en œuvre en changeant l'état de l'une quelconque de la pluralité de variables d'état ;
le fait de déterminer de manière stochastique s'il faut ou non accepter la transition d'état sur la base d'une comparaison entre la quantité de changement de l'énergie et un seuil calculé sur la base de la valeur de température et d'une valeur de nombre aléatoire ;
la sélection de la variable d'état pour laquelle la transition d'état est acceptée et le changement de l'état de la variable d'état sélectionnée ;
le calcul d'énergie post-transition après le changement de l'état de la variable d'état ; et
la définition de l'énergie post-transition comme l'énergie la plus basse dans un cas où l'énergie post-transition calculée est inférieure à l'énergie la plus basse.

4. Programme d'optimisation qui, lorsqu'il est mis en œuvre sur l'appareil (1) d'optimisation selon la revendication 1, amène l'appareil d'optimisation à mettre en œuvre un traitement comprenant :
pendant une exécution d'initialisation :

la comparaison de chacune des valeurs attendues prédéterminées d'états d'une pluralité de variables d'état incluses dans une fonction d'évaluation représentant l'énergie à une valeur correspondante de valeurs des états des variables d'état conservées par une pluralité d'unités de recuit, chaque valeur attendue représentant un état initial prédéterminé et l'état étant représenté par 0 ou 1 ;

pour chacune des variables d'état, la sortie d'une indication montrant si la valeur attendue n'est pas égale à la valeur de l'état de la variable d'état conservée par l'unité (10) de recuit correspondante ;

la sélection d'une variable d'état dont la valeur n'est pas égale à la valeur attendue de la variable d'état conservée par une unité (107) de conservation de valeur attendue sur la base des indications de sortie ; et

le changement de l'état de la variable d'état sélectionnée en un autre état jusqu'à ce que les valeurs des états des variables d'état soient toutes égales aux valeurs attendues pour obtenir des états de spin de spins égaux aux valeurs attendues respectives en tant qu'états initialisés et, après l'exécution d'initialisation :

la commande d'une valeur de température indiquant une température ;

le calcul d'une quantité de changement de l'énergie représentée par la fonction d'évaluation dans un cas où une transition d'état est mise en œuvre en changeant l'état de l'une quelconque de la pluralité de variables d'état ;

le fait de déterminer de manière stochastique s'il faut ou non accepter la transition d'état sur la base d'une comparaison entre la quantité de changement de l'énergie et un seuil calculé sur la base de la valeur de température et d'une valeur de nombre aléatoire ;

la sélection de la variable d'état pour laquelle la transition d'état est acceptée et le changement de l'état de la variable d'état sélectionnée ;

le calcul d'énergie post-transition après le changement de l'état de la variable d'état ; et

la définition de l'énergie post-transition comme l'énergie la plus basse dans un cas où l'énergie post-transition calculée est inférieure à l'énergie la plus basse.

# FIG. 1

# FIG. 2

ANNEALING UNIT ⌐10

LOCAL FIELD management UNIT ⌐101

SPIN STATE management UNIT ⌐102

ENERGY CHANGE AMOUNT CALCULATION UNIT ⌐103

THRESHOLD GENERATION UNIT ⌐30

INVERSION CANDIDATE FLAG GENERATION UNIT ⌐104

EXPECTED VALUE HOLDING UNIT ⌐107

INITIAL SETTING CONTROL UNIT ⌐80

SIGNAL SELECTOR CIRCUIT ⌐105

EXPECTED VALUE COMPARISON UNIT ⌐108

SPIN NUMBER HOLDING UNIT ⌐106

INVERSION SPIN SELECTION UNIT ⌐50

# FIG. 3A

START

SET INITIAL VALUES OF SPIN STATES AND LOCAL FIELDS ~ S101

SET EXPECTED VALUES OF SPIN STATES ~ S102

SET INITIAL VALUE OF ENERGY ~ S103

TURN ON INITIALIZATION SIGNAL ~ S104

B

CALCULATE CHANGE AMOUNT OF ENERGY ASSOCIATED WITH INVERSION ~ S105

GENERATE INVERSION CANDIDATE FLAG BASED ON INVERSION EVALUATION FORMULA ~ S106

DFTERMINE WHETEHR INVERETED SPIN STATE IS EQUAL TO EXPECTED VALUE BY COMPARISON ~ S107

GENERATE INVERSION CANDIDATE FLAG BASED ON EXPECTED VALUE ~ S108

IS INITIALIZATION SIGNAL ON? S109

YES

NO

OUTPUT INVERSION CANDIDATE FLAG BASED ON EXPECTED VALUE S110

OUTPUT INVERSION CANDIDATE FLAG BASED ON INVERSION EVALUATION FORMULA ~ S111

A

# FIG. 3B

(A)

S112
IS THERE INVERSION CANDIDATE? — NO →

S113
TURN OFF INITIALIZATION SIGNAL

YES

S114
CONFIRM INVERSION SPIN

UPDATE ENERGY INFORMATION — S115

S116
NO ← LESS THAN LOWEST ENERGY?

YES

UPDATE LOWEST ENERGY AND STORE SPIN STATES — S117

UPDATE SPIN STATES — S118

UPDATE LOCAL FIELD — S119

S120
NO ← HAVE NUMBER OF COMPUTING ITERATIONS BEEN COMPLETED?

(B)

YES

END

# FIG. 4

201 202

CONTROL CIRCUIT — 203

# FIG. 5

# FIG. 6

51
SOLUTION-SEEKING
PROBLEM

52
OPERATING
CONDITION

S151
CONVERT PROBLEM
INTO ISING MODEL

53
ISING MODEL
ENERGY FORMULA

S152
DETERMINE SPIN STATES AT
COMPUTATION START TIME

54
INITIAL VALUES
OF SPIN STATES,
LOCAL FIELDS,
AND ENERGY

55
EXPECTED VALUES
OF SPIN STATES
AT COMPUTATION
START TIME

S153
INPUT PARAMETERS

S154
EXECUTE COMPUTATION
BY ISING COMPUTING
DEVICE

56
COMPUTATION
RESULT

S155
ACQUIRE RESULT

S156
INTERPRET RESULT

57
SOLUTION TO
SOLUTION-SEEKING
PROBLEM

FIG. 7

# FIG. 8

## FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063626 A

- US 2020090051 A1

**Non-patent literature cited in the description**

- **Z. ZHU** ; **C. FANG** ; **H. G. KATZGRAMER**. borealis - a generalized global update algorithm for Boolean optimization problems. *arXiv: 1605.09399*, 2016